# EUROPEAN PATENT APPLICATION

(11) **EP 4 744 507 A2**
(43) Date of publication of application: **20.05.2026**
(21) Application number: 24839939.6
(22) Date of filing: 25.06.2024
(51) Int. Cl.: A23J 3/22, A23J 1/00, A23L 31/00, A23L 29/00, A23L 27/00, A23L 13/60

(54) **PLANT-BASED PROTEIN SUBSTITUTE FOOD OBTAINED THROUGH IMMERSION CULTURING OF MORCHELLA ESCULENTA MYCELIUM, AND METHOD FOR PRODUCING SAME**

(30) Priority: 13.07.2023 KR 20230091004
(71) Applicant: LONGRUNN MEDICAL TECHNOLOGIES PTE. LTD., Singapore 128424 (SG)
(72) Inventor: KIM, Minju, Seoul 004718 (KR); KIM, Byoungcheon, Gimcheon-si, Gyeongsangbuk-do 39519 (KR)
(74) Representative: Rimini, Rebecca
(86) International application number: PCT/KR2024/008780
(87) International publication number: WO 2025/014125

(57) **Abstract**

The present invention relates to a plant-based protein substitute food produced through immersion culturing of *Morchella esculenta* mycelium, and a method for producing same. The mycelium of *Morchella esculenta* Morel KK (Accession No: KACC83080BP) newly isolated for a protein substitute obtained by the method according to the present invention has a short culturing period of 5.5 days compared to other mushrooms, has a remarkably high mycelial production yield 3-4 times greater than that of other mushrooms, has a texture similar to that of chicken or beef after being cooked as a press-molded product, and is remarkably price competitive compared to commercially available plant-based artificial meat, and thus can be effectively used in the development of protein substitute and meat substitute foods.

## Description

### Technical Field

The present invention relates to plant-based protein substitute (alternative protein) food obtained through immersion culturing (submerged culture) of a newly isolated morel (*Morchella esculenta* Morel kk; Accession No.: KACC83080BP) mycelium and a method for producing the same.

### BACKGROUND ART

A protein substitute is substitute for replacing traditional meat, and is classified into cultured meat made by culturing animal muscle stem cells, a meat substitute made from proteins extracted from insect proteins, seaweed proteins, as well as soybeans, wheat, pumpkin, mushrooms, etc., and the like.

The cultured meat refers to the process of producing meat from animal cells using biotechnology, while the meat substitute refers to a product capable of substituting meat by using plant-based proteins and the like to mimic the taste and texture of meat.

Meat substitute foods are artificially manufactured proteins through plant or cereal extraction or microbial cultivation to achieve the taste and texture of animal proteins, and are popular among consumers with various dietary habits, such as vegetarians or vegans.

The market for protein substitutes has entered a growth phase not only in the US and Europe, but also in neighboring China and Japan. A large industrial cluster has formed, led by enterprises such as Impossible Foods, Eat Just, and Memphis Meats in the US; Aleph Farms and Future Meat in Israel, and Mosa Meat and Meatable in the Netherlands. Protein substitute foods began in 2009 with a plant-based meat substitute made burger patty launched by company Beyond Meat. In addition, in 2013, the Dutch company Mosa Meat launched cultured meat burgers, while the US enterprise Eat Just, as a company that first successfully achieves commercialized cultured meat technology, created the world's first egg made from mung beans in 2017, selling over 100 million eggs within three years, thereby bringing its current valuation to 1.2 billion US dollars. In addition, the US company Memphis Meats, as a cultured meat startup, made headlines after receiving an investment of 17 billion US dollars from Bill Gates.

As of 2021, the global protein substitute market had increased to about 16.7 billion US dollars, and it is projected to increase at an average annual rate of 15.3% from 2021 to 2028, with the overall market size of the protein substitutes expected to reach 44.8 billion US dollars in 2028.

In contrast, South Korea is still in the stage of introducing protein substitutes and urgently needs to build a sustainable ecosystem by relaxing regulatory restrictions and reforming the system.

A mushroom mycelium, as a protein substitute material, is a low-calorie food composed of water, protein, and fiber. When the mushroom mycelium is subjected to immersion culturing in a liquid culture medium, the mushroom mycelium has the advantage of being able to be stably and massively produced in a short time using automated equipment.

However, not all mushroom mycelium can be used as a meat substitute material, as not only is a short cultivation period and high yield of the mycelium needed, but the resulting mycelium also needs to achieve a texture similars to meat when cooked. Therefore, there is an urgent need to identify a mushroom mycelium strain suitable for use as the meat substitute material.

### SUMMARY OF TEH INVENTION

### Problem to be solved by the present invention

To solve the problem described above, the present invention aims to provide a method for immersion culturing of a newly isolated morel (*Morchella esculenta* Morel kk; Accession No.: KACC83080BP) mycelium to prepare a plant-based protein substitute (alternative protein) food composition.

In addition, the present invention aims to provide a method for processing the newly isolated, immersion-cultured morel mycelium into a material suitable for use as a protein substitute or a meat substitute food material.

In addition, the present invention aims to provide a plant-based alternative protein or alternative meat food processed by the method.

### Means for solving the problems

An embodiment of the present invention relates to a method for producing a meat substitute (alternative meat) composition, the preparation method comprising: step a), culturing the newly isolated morel ((Morei: *Morchella esculenta*) Morel kk) (Accession No.: KACC83080BP) mycelium in a culture medium containing a carbon source, a nitrogen source and minerals; and step b), after culturing, isolating the morel mycelium.

Another embodiment of the present invention relates to a meat substitute produced by the preparation method.

Another embodiment of the present invention relates to a meat substitute food containing the meat substitute as an active ingredient.

### Effect of the invention

The morel ((*Morchella esculenta)* Morel kk) (Accession No.: KACC83080BP) newly isolated for the protein substitute obtained through the present invention has a yield of the mycelium that is significantly 3 ~ 4 times higher than other mushrooms, has a texture similar to that of chicken or beef after cooking a press-molded product, and has significantly better price competitiveness than that of commercially available plant-based artificial meat, which therefore can be effectively used for the development of protein substitute and meat substitute foods.

### BRIEF DESCRIPTION OF THR FIGURES

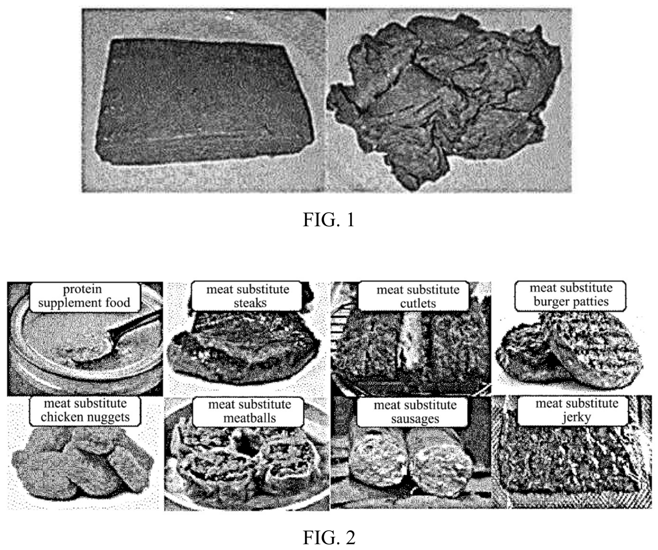

FIG. 1 relates to a press-molded product of immersion-cultured morel ((*Morchella esculenta)* Morel kk) (Accession No.: KACC83080BP) mycelium.
FIG. 2 relates to a protein supplement food and a meat substitute cooking product processed with the press-molded product of immersion-cultured morel ((*Morchella esculenta*) Morel kk) (Accession No.: KACC83080BP) mycelium.

### DETAILED DESCRIPTION

Hereinafter, the present invention will be described in detail with reference to the tables or accompanying drawings.

When an accompanying drawing is provided, the accompanying drawing is provided only by way of example so that the idea of the present invention may be sufficiently conveyed to those skilled in the art. Therefore, the present invention is not limited to the accompanying drawings as presented and may be embodied in other forms as well, and the drawings may be exaggerated to clearly illustrate the idea of the present invention.

In this case, unless otherwise defined, the technical terms and scientific terms used herein have the meanings commonly understood by one of ordinary skill in the art to which the present invention pertains, and descriptions of known functions and configurations that may unnecessarily obscure the aim of the present invention will be omitted in the following description and the accompanying drawings.

In addition, unless the context specifically dictates otherwise, the singular form used in the Description of the present invention may also comprise the plural form.

In addition, all units used in the Description of the present invention without specific mention and use are based on weight, for example, the unit of "%" or ratio represents weight% or weight ratio.

In addition, in the Description of the present invention, the expression "comprises" is an open description having the same meaning as the expression such as "providing", "containing", "having" or "characterized in that", and does not exclude elements, materials or processes that are not additionally listed. In addition, the expression "substantially consisting of ..." means that other elements, materials, or processes that are not listed in conjunction with a specified element, material, or process may be present in an amount that does not have an unacceptably significant effect on at least one basic and novel technical idea of the invention. In addition, the expression "composed of" means that only the described elements, materials or processes are present.

In the present invention, the term "sample" or "test sample" refers to an object for analysis, and is used with the same meaning throughout the Description.

Hereinafter, a method for producing the meat substitute composition (alternative meat) of the present invention will be described in detail.

An embodiment of the present invention relates to a method for producing a meat substitute composition, the preparation method comprising: step a), culturing the newly isolated morel ((*Morchella esculenta*) Morel kk) (Accession No.: KACC83080BP) mycelium in a culture medium containing a carbon source, a nitrogen source and minerals; and step b), after culturing, isolating the morel mycelium.

The type of mushroom is not particularly limited as long as it is possible to produce the protein substitute or meat substitute of the present invention that is very similar to the meat quality and texture of real meat; preferably, it may be morel; and more preferably, it may be the morel from the wild hills in Korea; and most preferably, it may be the morel isolated from the soil of the wild hills in Gangwon-do, Korea. When the isolated morel is used, the culture time is not longer than when other mushrooms are used, and compared with other types of mushrooms or morels isolated from other regions, it is preferable because it not only can obtain 3 - 4 times mycelium, but also has meat quality and texture very similar to those of real meat.

Morel is an edible mushroom pertaining to *Morchellaceae* family, *Pezizales* order, *Ascomycota phylum,* with the scientific name of Morchella genus. In English-speaking regions, it is generally called morel, while in Korea, it is called "pockmarked mushroom" because the mushroom surface is similar to pockmarks (literal translation from Korean) (see the National Institute of Biological Resources, Korea, http://species.nibr.go.kr).

Morel grows in clusters under trees in forests or courtyards from March to May, and the cap part of its fruiting body contains ascospores and paraphyses. The body of the morel consists of a cap and a stipe, with a height of about 6 - 12 cm. The cap is pale yellow and broadly oval, has basket-like grooves on the surface and soft flesh. The stipe is 4 - 5.5 cm in lengh and 2.6 - 3 cm in width, nearly cylindrical in shape, white or pale yellowish white, and hollow inside.

Morel is widely distributed in temperate regions of the northern hemisphere, such as Korea, and is a popular high-end food ingredient in Europe and North America due to its excellent texture and nutritional value, and has been studied relevant fields in terms of food and nutrition or artificial cultivation technology; however, the study on the application of the morel mycelium obtained by immersion culturing of the newly isolated morel ((*Morchella esculenta*) Morel kk) (Accession No.: kacc83080bp), as a protein substitute material has been attempted for the first time in the present invention.

The morel ((*Morchella esculenta)* Morel kk) (Accession No.: KACC83080BP) was collected from a wild hill in Daehwa-ri, Daehwa-myeon, Pyeongchang-gun, Gangwon-do, Korea, and was isolated and obtained after tissue culture, which was named *Morchella esculenta* Morel kk after identification through genetic analysis (Macrogen, Korea), and deposited with the Korean Agricultural Culture Collection (KACC) of Korea under Accession No. KACC83080BP on July 3, 2023.

The type and properties of the culture medium for culturing the newly isolated morel ((*Morchella esculenta)* Morel kk) (Accession No.: KACC83080BP) are not particularly limited, but it is preferable to use a culture medium suitable for combining the nutrients described later and for culturing the morel mycelium; according to a particular example of the present invention, the culture medium may be a liquid culture medium; and as a more specific example, an immersion culturing (submerged culture) method may be used, that is, after mixing the nutrients described later in a solvent (water, etc.) at a certain ratio (relative to the weight of the entire composition), immersing and culturing the mycelium. In the case of immersion culturing using the culture medium, it is preferable because the supply of nutrients and the culture of morel are smooth, so that the morel mycelium can grow rapidly in a short time.

In contrast, the morels isolated from other regions has a significantly slower growth rate of mycelium than that of morel newly isolated in the present invention, indicating that there was a large difference in metabolic activity.

Nutrients contained in the culture medium for culturing the morel ((*Morchella esculenta)* Morel kk) (Accession No.: KACC83080BP) may include, a carbon source, a nitrogen source, minerals, and the like, but are not limited thereto, wherein, the carbon source may be any one or more selected from the group consisting of maltose, glucose, lactose, starch, sucrose, fructose, galactose, and the like; according to a specific example of an embodiment of the present invention, based on the total composition, sucrose ( a disaccharide) and fructose, which provide a high myceliuml growth rate, may be contained in amounts of 0.5 ~ 2% (w/v), respectively, preferably 0.7 - 1.6% (w/v), and more preferably 0.9 - 1.1% (w/v), but not limited thereto, and within the range described, the following effects can be obtained: the morel mycelium grow rapidly, and the amount of the generated mycelium is increased by 3 - 4 times or more compared with other mushrooms or morels isolated from other regions.

The nitrogen source among nutrients contained in the culture medium for culturing the morel ((*Morchella esculenta*) Morel kk) (Accession No.: KACC83080BP) may be any one or more selected from the group consisting of yeast extract, soy peptone, soy flour, ammonium chloride, calcium nitrate, potassium nitrate, sodium nitrate, and the like; according to a specific example of an embodiment of the present invention, based on the total composition, yeast extract and soy peptone may be contained in amounts of 0.1 - 1% (w/v), respectively, preferably 0.15 - 0.5% (w/v), and more preferably 0.20 - 0.30% (w/v), and at the same time, the yeast extract:soy peptone may satisfy a ratio of 1:0.6 - 1.5, preferably a ratio of 1:0.8 - 1.3, and more preferably a ratio of 1:0.9 - 1.1, but is not limited thereto, and within the range described, the following effects can be obtained: the morel mycelium grow rapidly, and the amount of the generated mycelium is increased by 3 - 4 times or more compared with other mushrooms or morels isolated from other regions.

The minerals among nutrients contained in the culture medium for culturing the morel ((*Morchella esculenta)* Morel kk) (Accession No.: KACC83080BP) may be any one or more selected from the group consisting of K₂HPO₄, KH₂PO₄, ZnSO₄, MgSO₄, CuSO₄, FeSO₄, and the like, but are not limited thereto; according to a specific example of an embodiment of the present invention, based on the total composition, KH₂PO₄ and MgSO₄ used as buffers may be contained in amounts of 0.01 ~ 0.2% (w/v), respectively, preferably 0.05 ~ 0 0.15% (w/v), and more preferably 0.09 - 0.19% (w/v), and at the same time, KH₂PO₄:MgSO₄ may satisfy a ratio of 1:0.5 - 2, preferably a ratio of 1:0.7 - 1.5, and more preferably a ratio of 1:0.9 - 1.1, but is not limited thereto.

The apparatus or environment for culturing the morel ((*Morchella esculenta)* Morel kk) (Accession No.: KACC83080BP) is not particularly limited, and may be, for example, performed in a stirred-type bioreactor; according to a specific example of an embodiment of the present invention, operating conditions may satisfy following conditions: an air supply amount of 0.05 - 0.2 vvm, a stirring speed of 30 - 100 rpm, a culture temperature of 22 - 27°C, a pH of 5 - 7, and a culture time of 4.5 - 7 days, preferably, conditions of an air supply amount of 0.07 - 0.15 vvm, a stirring speed of 45 - 80 rpm, a culture temperature of 23 - 26°C, a pH of 5.4 - 6.6, and a culture time of 5.0 - 6.2 days, and more preferably, conditions of an air supply amount of 0.09 - 0.11 vvm, a stirring speed of 55 - 65 rpm, a culture temperature of 24 - 26°C, a pH of 5.8 - 6.2, and a culture time of 5.3 - 5.8 days, but are not limited thereto, and it is preferable that under the conditions described, the following effects can be obtained: the newly isolated morel mycelium grow rapidly, the amount of the generated mycelium is increased by 3 - 4 times or more compared with other mushrooms or morels isolated from other regions, and meat quality and texture similar to real meat can be obtained. In contrast, other mushrooms or morels isolated from other regions exhibit an obvious difference in meat quality or texture from real meat, and as mentioned above, mycelium grow slowly, which is therefore not suitable for use as meat substitutes or meat substitute foods.

Hereinafter, a meat substitute produced through the method for producing a meat substitute composition of the present invention and a meat substitute food containing the same will be described in detail.

Another embodiment of the present invention relates to a meat substitute produced by the preparation method.

The meat substitute produced through the preparation method may have a moisture content of 82 - 88%, preferably 83 - 87%, and more preferably 84 - 86%, but is not limited thereto; when the moisture content is within the above range, the meat quality and texture of the meat substitute are very similar to those from real meat and are difficult to distinguish therefrom, which is therefore preferable; however, when the moisture content exceeds the above range, the binding force of the meat substitute is lowered, making it difficult to achieve the meat quality and texture of meat, and when the moisture content is below the above range, the binding force of the meat substitute is good, but the texture is not good due to the toughness of the tissue, which is therefore not preferable.

Another embodiment of the present invention relates to a meat substitute food containing the meat substitute as an active ingredient.

The meat substitute food is not particularly limited, but may contain a spice, a sweetener, a sauce, and a quality improver. The spice may be used to remove odors (deodorize) when producing a plant-based meat substitute, and specific examples thereof may contain one or more selected from the group consisting of black pepper (e.g., black pepper powder), garlic (e.g., garlic powder), ginger (e.g., ginger powder), onions (e.g., onion powder), and the like, but are not limited thereto. The sweetener exhibits a refreshing sensation and sweet taste when added, and it is not particularly limited as long as it is a substance that maximizes sweetness by being added in the preparation process of the meat substitute, and for example, a hot water extract of dried plant fruits such as a yacon extract may be exemplified. In addition, in the present Description, the term "sauce" may refer to a seasoning liquid having a flavor soaked to taste or soften meat before cooking the meat in a general sense, but is not limited thereto.

The meat substitute food may be commercialized in various types of formulations selected from the group consisting of steaks, cutlets, patties, nuggets, meatballs, sausages, jerky, and the like, but is not limited thereto; and the method for cooking or producing the same is not particularly limited as long as it is a product form that can provides meat quality and texture consistent with those of meat. In the preparation of the meat substitute food, the method for cooking or producing it may be used without limitation as long as it is a method know by one of ordinary skill in the art (chef, etc.) or a commonly known method, and the cooking method presented in the formulation examples of the present invention does not limit the scope of the present invention.

Hereinafter, the present invention will be described in more detail with reference to examples. These examples are for exemplary illustration of the present invention only, and it will be apparent to one of ordinary skill in the art that the scope of the present invention should not be construed as limited by these examples.

### [Material and reagent information]

### [Material]

- The morel ((*Morchella esculenta)* Morel kk) (Accession No.: KACC83080BP), strain: collected in April 2022 from a wild hill in Daehwa-ri, Daehwa-myeon, Pyeongchang-gun, Gangwon-do, Korea, isolated and obtained after tissue culture, and used after identification through genetic analysis (Macrogen, Korea).

### [Reagent]

- Other reagents were purchased from Sigma-Aldrich (St. Louis, MO, Missouri) and used.

### [Example 1] Search for immersion culturing conditions of morel mycelium

In the present invention, the conditions for immersion culturing were searched using a 50 L bioreactor installed at the Korea Bio Industry Promotion Agency(Jinju, Korea).

40 L of tap water was added to a 50 L bioreactor, and a carbon source, a nitrogen source, minerals, and the like were combined and added to each experimental group, followed by autoclaving at 121°C and 1.25 bar for 15 minutes, cooling to 25°C, and then 400 ml of a 1% (w/v) inoculum of the newly isolated morel ((*Morchella esculenta)* Morel kk) (Accession No.: KACC83080BP) strain was inoculated into a 1,000 ml Erlenmeyer flask.

### 1-1. Measurement of the effect of carbon sources

The effect of the following 6 carbon sources on the growth of morel mycelium was measured.

As a carbon source, 2% (w/v) of maltose, glucose, lactose, starch, sucrose, and fructose were added to each experimental group, respectively.

A small amount of 0.1% (w/v) yeast extract was added as a common nitrogen source for each experimental group.

10 ml of morel liquid strain was inoculated into 600 ml of culture water, and cultured at 25°C and 120 rpm for 5 days. Thereafter, 100 ml of the culture solution was collected and centrifuged at 10,000 rpm for 10 minutes, the supernatant was then removed, and the weight of the mycelium was measured at a moisture content of 85% and the results are shown in Table 1 below.

**Table 1**

| Carbon Source | Maltose | Glucose | Lactose | Starch | Sucrose | Fructose |
|---|---|---|---|---|---|---|
| Mycelium Weight (g/100ml) | 1.36g | 2.43g | 1.23g | 2.48g | 2.03g | 1.95g |

From the results of Table 1, it was confirmed that the yield of the mycelium was excellent in the order of using starch, glucose, sucrose, and fructose as carbon sources.

Among them, when sucrose, which is a disaccharide, and fructose were mixed except for starch, which is a polysaccharide, and glucose, which is a monosaccharide, the yield of the mycelium according to the mixing ratio was measured in the manner described above, and the results are shown in Table 2 below.

**Table 2**

| Carbon Source | Sucrose:Fructose (% w/v) | | | | |
|---|---|---|---|---|---|
| Combination Ratio | 0.5:1.5 | 1.0:1.0 | 1.5:0.5 | 1.5:1.5 | 2.0:2.0 |
| Mycelium Weight (g/100ml) | 2.02g | 2.53g | 2.23g | 2.11g | 2.10g |

As a result, when sucrose, which is a disaccharide, or fructose was added in an amount of 2% (w/v) or more, the mycelium yield decreased, the reason for which is unknown, while the weight of the mycelium exceeded that when the carbon source was used alone, it showed the most significant and surprising results when the combination of carbon sources at approximately a 1:1 ratio was added at a concentration of 1% (w/v).

### 1-2 . Measurement of the effect of nitrogen sources

The effects of the following 6 types of nitrogen sources, which are most commonly used during microbial culture, on the growth of the newly isolated *Morchella esculenta* Morel kk (Accession No.: KACC83080BP) mycelium were measured.

As a nitrogen source, soybean flour, soy peptone, yeast extract, ammonium chloride, calcium nitrate, and sodium nitrate were added at a concentration of 0.4% (w/v), which is 1/5 of the carbon source, in a liquid culture medium, respectively.

As a common carbon source for each experimental group, a mixture in which sucrose and fructose were mixed at a concentration of 1% (w/v), respectivley, was added.

10 ml of morel liquid strain was inoculated into 600 ml of culture water, and cultured at 25°C and 120 rpm for 5 days. Thereafter, 100 ml of the culture solution was collected and centrifuged at 10,000 rpm for 10 minutes, the supernatant was then removed, and the weight of the mycelium was measured at a moisture content of 85% and the results are shown in Table 3 below.

**Table 3**

| Nitrogen Source | 0.4% (w/v) | | | | | |
|---|---|---|---|---|---|---|
| Composition Ratio | Soybean Flour | Soy Peptone | Yeast Extract | Ammonium Chloride | Calcium Nitrate | Sodium Nitrate |
| Mycelium Weight (g/100ml) | 2.21g | 2.46g | 2.37g | 2.12g | 1. 14g | 1.18g |

From the results of Table 3, it was confirmed that the yield of the mycelium was excellent in the order of using soy peptone, yeast extract, soybean flour, and ammonium chloride as a nitrogen source.

Among them, when the soy peptone and the yeast extract were mixed, the yield of the mycelium according to the mixing ratio was measured in the manner described above and the results are shown in Table 4 below.

**Table 4**

| Nitrogen Source | Soy Peptone:Yeast Extract (% w/v) | | | | |
|---|---|---|---|---|---|
| Combination Ratio | 0.2:0.2 | 0.1:0.3 | 0.3:0.1 | 0.25:0.25 | 0.30:0.30 |
| Mycelial Weight (g/100mL) | 2.49g | 2.39g | 2.40g | 2.43g | 2.43g |

As a result, the reason for the addition of the soy peptone or yeast extract at a concentration of 0.2% (w/v) at approximately a 1:1 ratio was unknown, but the weight of the mycelium exceeded that when the nitrogen source was used alone, showing the most significant and surprising results

### 1-3. Measurement of the effect of minerals

The effects of the following 6 types of minerals, which are most commonly used during microbial culture, on the growth of the newly isolated *Morchella esculenta* Morel kk (Accession No.: KACC83080BP) mycelium were measured.

Based on the total amount of the culture medium, as minerals, 0.1% (w/v) of KH₂PO₄ and MgSO₄ used as buffers were added, respectively, and 0.1% (w/v) of CaCl₂, FeSO₄, ZnSO₄ and CuSO₄ were further added for each experimental group.

As a common carbon source for each experimental group, a mixture in which sucrose and fructose were mixed at a concentration of 1% (w/v), respectively, was added, and as a common nitrogen source, a mixture in which soy peptone and yeast extract were mixed at a concentration 0.2% (w/v), respectively, was added.

10 ml of morel liquid strain was inoculated into 600 ml of culture water, and cultured at 25°C and 120 rpm for 5 days. Thereafter, 100 ml of the culture solution was collected and centrifuged at 10,000 rpm for 10 minutes, the supernatant was then removed, and the weight of the mycelium was measured at a moisture content of 85% and the results are shown in Table 5 below.

**Table 5**

| Mineral Composition Ratio | (Buffer) KH₂PO ₄0.1% | (Buffer) + C aCl₂ 0.1% | (Buffer) + F cSO₄ 0.1% | (Buffer) + Z nSO₄ 0.1% | (Buffer) + C uSO₄ 0.1% |
|---|---|---|---|---|---|
| | MgSO₄ 0.1% | | | | |
| Mycelium Weight (g/100ml) | 2.55g | 2.56g | 2.56g | 2.55g | 2.56g |

As a result, there was no significant difference in the mycelium yield according to the type and content of minerals.

### [Example 2] Search for operating conditions of immersion culturing of morel mycelium

When performing the immersion culturing of the newly isolated morel ((*Morchella esculenta)* Morel kk) (Accession No.: KACC83080BP) mycelium, in order to establish an operating condition, 40 L of culture water, a mixture in which 1% (w /v) of sucrose and fructose were mixed, respectively (as a carbon source), a mixture in which 0.2% (w/v) of soy peptone and yeast extract were mixed, respectively (as a nitrogen source), and a mixture in which 0.1% (w/v)of KH₂PO₄ and MgSO₄ were mixed, respectively (as minerals) were added to a 50 L bioreactor, 400 mL of morel strain was inoculated, and then the mixture was cultured for 5 days.

### 2.1. Stirring speed

During the immersion culturing of mycelium, stirring speed affects the occurrence of entanglement phenomena and increased activity of mycelium. The results of the measured yield of the mycelium after culturing morel in the same manner as in described example under the conditions of different stirring speed of the fermentor, are shown in Table 6 below.

**Table 6**

| Stirring Speed (rpm) | Mycelium Yield (g/100mL) |
|---|---|
| 40 | 1.81 |
| 50 | 2.45 |
| 60 | 2.48 |
| 70 | 2.47 |
| 80 | 2.22 |
| 100 | 1.64 |

As a result, the yield of the mycelium was higher when stirring at 50 - 70 rpm. In the following experiments, the mixture was stirred at 60 rpm.

### 2.2. Air supply amount

In order to measure the effect of the air supply amount on the growth of mycelium during the immersion culturing of mycelium, the results of the measured yield of the mycelium after culture at different air supply amount under the conditions of 2.1, are shown in Table 7 below.

**Table 7**

| Air Supply Amount (vvm) | Mycelium Yield (g/100mL) |
|---|---|
| 0.05 | 2.43 |
| 0.10 | 2.51 |
| 0.15 | 2.50 |
| 0.20 | 2.47 |

As a result, when the air supply amount was 0.10 vvm, the yield of the mycelium was the highest, and when the air supply amount was 0.15 vvm or more, the generation of bubbles increased as the air supply amount increased, causing the addition of an antifoaming agent, and accordingly, the yield of the mycelium also decreased. In the following experiments, the air was supplied at 0.10 vvm.

### 2.3. Culture Temperature

In order to measure the effect of the culture temperature on the growth of mycelium during the immersion culturing of mycelium, the results of the measured yield of the mycelium under the conditions of 2.2 while maintaining different culture temperatures, are shown in Table 8 below.

**Table 8**

| Culture Temperature (°C) | Mycelial Yield (g/100mL) |
|---|---|
| 22 | 2.31 |
| 23 | 2.44 |
| 24 | 2.51 |
| 25 | 2.53 |
| 26 | 2.52 |
| 27 | 2.34 |

As a result, the yield of the mycelium was the highest at a culture temperature of 24 - 26°C. In the following experiments, the culture was performed at a temperature of 25°C.

### 2.4. Culture solution pH

In order to measure the effect of the culture solution pH on the growth of mycelium during the immersion culturing of the mycelium, the results of measured yield of the mycelium after culture under the conditions of 2.3 while maintaining different culture solution pH values, are shown in Table 9 below.

**Table 9**

| pH | Mycelium Yield (g/100mL) |
|---|---|
| 5 | 2.23 |
| 5.5 | 2.50 |
| 6 | 2.52 |
| 6.5 | 2.52 |
| 7 | 2.49 |

As a result, the yield of the mycelium was the largest when the pH of the culture medium was 6 - 6.5. In the following experiments, the culture was performed at a pH of 6.

### 2.5. Culture time

In order to measure the effect of the culture time on the growth of mycelium during the immersion culturing of mycelium, the results of the measured yield of the mycelium after culture under the conditions of 2.4 while maintaining different culture time, are shown in Table 10 below.

**Table 10**

| Culture Time | Mycelium Yield (g/100mL) |
|---|---|
| 72 hours (3 Days) | 0.55 |
| 96 hours (4 Days) | 1.26 |
| 120 hours (5 Days) | 2.49 |
| 132 hours (5.5 Days) | 2.55 |
| 144 hours (6 Days) | 2.55 |
| 168 hours (7 Days) | 2.49 |
| 192 hours (8 Days) | 2.27 |

As a result, the yield of the mycelium began to increase rapidly from day 4, reached the maximum value on day 5.5, and then started to decrease slowly from day 7..

### [Example 3] Isolation and forming processing of morel mycelium after culture

In order process the morel ((*Morchella esculenta*) Morel kk) (Accession No.: KACC83080BP) mycelium cultured through decribed examples into a protein substitute material for storage and sale, the mycelium was separated from the culture solution by the following method and formulated through forming processing.

### 3.1. Culture solution dehydration and mycelium forming processing

For mycelium forming processing, first, mycelium were separated from the culture solution using the following method.

A dehydrator or filter press was used for the separation of mycelium from the culture solution.

### 1) Separation using a dehydrator and mycelium forming processing

The culture solution was added into a dehydrator for the first dehydration, and the dehydrated culture solution was injected into a press-molded mold of an appropriate standard, compressed until the moisture content reaches 85% and formed.

### 2) Separation using a filter press and mycelium forming processing

After filtering the culture solution by a filter press , the separated culture solution was discharged, and the mycelium stored on the filter plates of the filter press plate were separated separately. The mycelium stored on the filter plates were press-molded using a presser until the moisture content reached 85%.

### 3.2. Storage and preservation

For storage, preservation and distribution, the mycelium formed through the processes were vacuum-packed in plastic containers of an appropriately standard, and frozen and stored at low temperature.

When the mycelium were stored under refrigeration, the mycelium proliferated through metabolic activity, causing the formed mycelium to heat up and deteriorate, rendering it unusable.

### [Formulation Example 1] Plant-based protein supplement

The press-molded product of mycelium with a moisture content of 85% obtained in Example 3 was freeze-dried to obtain frozen mycelium with a moisture content of 1.5%, and then pulverized with an ultra-fine pulverizer (Migang, Korea) to obtain powder.

As a result of analyzing the components of the powder, it consisted of about 50% protein, about 45% fiber, and about 5% other ingredients. Since about 50% protein was contained as described above, the powder was directly formulated as a protein supplement without a separate protein extraction process, and a product was produced.

In this case, an appropriate amount of vitamin or the like was added as an auxiliary ingredient of the protein supplement to increase its functionality, and the formulation was commercialized into the forms of powder, granules, capsules, and tablets using the method for producing a conventional formulation used in the art.

### [Preparation Example 2] Meat substitute food

Various types of meat substitute food were produced by cooking the press-molded product of mycelium (hereinafter, referred to as a meat substitute) having a moisture content of 85% obtained in Example 3.

Hereinafter, the numbers recorded in the following preparation steps of the meat substitute food do not necessarily represent the preparation order, but are distinctions made to clarify the preparation processes, and if changing the order does not affect the preparation of the meat substitute food, then the preparation processes of the exchange order are also included.

### 2.1. Meat substitute steaks

200 g of press-molded product of mycelium (meat substitute), 1 tablespoon of olive oil, an appropriate amount of salt, an appropriate amount of pepper, 1 sprig of rosemary, an appropriate amount of starch, and a spice were mixed, aged in a refrigerator for 12 hours or more, and then heated on a frying pan to prepare a meat substitute steak.

### 2.2. Meat substitute cutlets

200 g of meat substitute, 1 cup of flour, 2 eggs, 1 cup of bread crumbs, 1 L of edible oil, an appropriate amount of salt, an appropriate amount of pepper, a spice, and the like were used to prepare a meat substitute cutlet by the following processes.
1) The flour and bread crumbs were put into different bowls.
2) The eggs were cracked, the salt, pepper and spice were put in a little bit and stirred to make egg liquor.
3) The meat substitute was coated with flour and soaked in the egg liquor.
4) The egg liquor-soaked meat substitute was taken out and coated with bread crumbs.
5) The bread crumbs-coated meat substitute was put into the frying pan containing edible oil, fried over medium-low heat for about 3 - 4 minutes, and then turned over when one side became golden brown, and the other side was fried in the same way.
6) The fried meat substitute was placed on a paper towel to absorb the oil, and drizzled with cutlet sauce to complete the meat substitute cutlet.

### 2.3. Meat substitute burger patties

500 g of meat substitute, 1/2 cup of bread crumbs, 1/2 cup of soy milk, 1 minced onion, 2 tablespoons of edible oil, 2 cloves of minced garlic, an appropriate amount of salt, an appropriate amount of pepper, an appropriate amount of starch, a spice, and the like were used to prepare a substitute burger patty by the following processes.
1) The meat substitute, bread crumbs, soy milk, onion, edible oil, garlic, salt, pepper and spice were put into a large bowl, mixed well and knead into a ball.
2) A dough was divided into 10 portions of 50 g each, and shaped with a patty mold.
3) The formed patty was put into a refrigerator and aged for 30 minutes.
4) The edible oil was put into a frying pan, the pan was heated over high heat, and the aged patty was put in for frying.
5) The patty was turned over for continue frying when one side was cooked to complete the meat substitute burger patty.

### 2.4. Meat substitute nuggets

500 g of meat substitute, 50 g of plant-based margarine, 1/4 cup of soy milk, 1/2 cup of flour, 1/2 teaspoon of salt, an appropriate amount of pepper, an appropriate amount of edible oil, an appropriate amount of starch, a spice, and the like were used to prepare meat substitute nuggets by the following processes.
1) The meat substitute was divided into bite-sized pieces of about 20 g each.
2) The margarine, soy milk, salt, pepper and spice were put into a bowl and mixed well.
3) The divided meat substitute pieces were coated with flour.
4) The flour-coated pieces were dipped in the mixed seasoning.
5) Then, the mixed seasoning-dipped meat substitute pieces were coated with bread crumbs.
6) The edible oil was put into a frying pan, the pan was heated over high heat, the bread crumb-coated meat substitute pieces was put in and fried for about 3 - 4 minutes until evenly cooked through to complete the meat substitute nuggets.

### 2.5. Meat substitute meatballs

150 g of meat substitute, 1/2 welsh onion, half a teaspoon of minced ginger, 1 teaspoon of minced garlic, 1 tablespoon of soy sauce, 1/2 teaspoon of sugar, 1 teaspoon of sesame oil, an appropriate amount of pepper, an appropriate amount of edible oil, an appropriate amount of starch, a spice, and the like were used to prepare meat substitute meatballs by the following processes.
1) The meat substitute was minced into a paste.
2) The chopped welsh onion, ginger, garlic, soy sauce, white sugar, sesame oil, pepper, starch and spice were added to the minced meat substitute, and mixed well.
3) The mixed meat substitute was divided into bite-sized portions and knead into round-shaped meatballs.
4) The meatballs were put into an oil pan at 180°C and fried for about 5 minutes until the center of the meatballs was fully cooked to complete the meat substitute meatballs.

### 2.6. Meat substitute sausages

500 g of meat substitute, 50 g of plant-based margarine, 1 onion, 2 cloves of garlic, 1 teaspoon of salt, an appropriate amount of pepper, an appropriate amount of parsley, an appropriate amount of starch, 1 spiral casing, an appropriate amount of edible oil, a spice, and the like were used to prepare a meat substitute sausage by the following processes.
1) The meat substitute was minced into a paste.
2) The minced meat substitute, and margarine, onion, garlic, salt, pepper, spice and parsley were put into a bowl, mixed well and knead into a meat dough.
3) Then, the meat dough was put into a refrigerator and aged for 30 minutes.
4) The aged meat dough was stuffed into the spiral casing with care to avoid breaking the casing.
5) The end of the casing was tied tightly to prevent the stuffed sausage from flowing out.
6) The sealed casing was put into a steamer and steamed at 110°C for about 20 minutes to prepare the meat substitute sausage.

### 2.7. Meat substitute jerky

500 g of meat substitute, 1/2 cup of soy sauce, 1/4 cup of white sugar, 2 tablespoons of minced garlic, an appropriate amount of pepper, an appropriate amount of starch, an appropriate amount of sesame, a spice, and the like were used to prepare meat substitute jerky by the following processes.
1) The meat substitute was chopped finely.
2) The seasoning was mixed well to make a broth.
3) Then, the chopped meat substitute was mixed with the broth and put in a refrigerator to age for about 1 hour.
4) The aged meat substitute was put into a forming mold and compressed to shape a thickness of 5 -10 mm.
5) The formed meat substitute was put into an oven and baked for about 30 minutes.
6) Then, the baked meat substitute was placed in a cool and ventilated place to air-dry for about 24 hours to prepare the meat substitute jerky.

As described above, specific parts of the content of the present invention have been described in detail, and it is obvious for those of ordinary skill in the art that such specific description are only preferred embodiments, and the scope of the present invention is not limited thereto. Therefore, the substantive scope of the present invention is defined by the appended claims and their equivalents.

### [Accession No.]

Name of Depositary Institution: Korean Agricultural Culture Collection (KACC)
Accession No.: KACC83080BP
Deposit Date: July 3, 2023

### To Mr. KIM, ByoungCheon

Thank you for depositing the valuable patented microorganism at Korean Agricultural Culture Collection (KACC). We are sending you the **patent microorganism deposit receipt** for the deposited microorganism as follows.

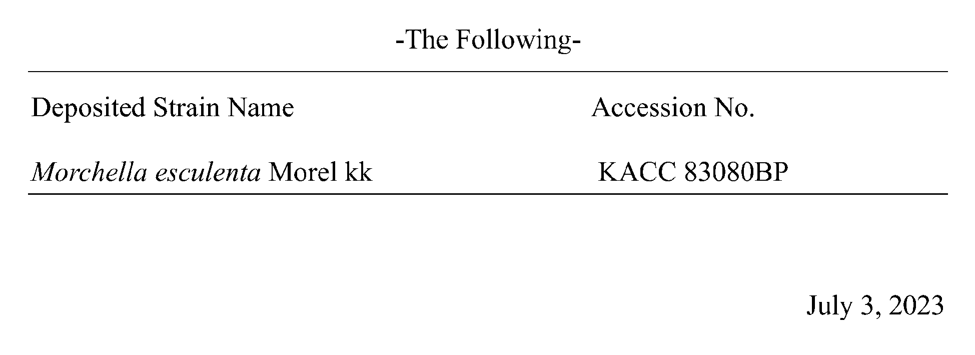

Agricultural Microbiology Division, Agricultural Biology Department, National Institute of Agricultural Sciences

166 Nongsaengmyeong-ro, Iseo-myeon, Wanju-gun, Jeollabuk-do Telephone: 063-238-3057, 3035 Fax: 063-238-3845.

## Claims

1. A method for producing a meat substitute composition, **characterized by** comprising:
step a) culturing a newly isolated morel (*Morchella esculenta*) Morel kk (Accession No.: KACC83080BP) mycelium in a culture medium containing a carbon source, a nitrogen source and minerals; and
step b) separating the morel mycelium after culture.

2. The method for producing a meat substitute composition according to claim 1, **characterized in that**
the morel (*Morchella esculenta*) Morel kk (Accession No.: KACC83080BP) is isolated from soil in a wild hill in Gangwon-do, Korea.

3. The method for producing a meat substitute composition according to claim 1, **characterized in that**
the culture is immersion culturing in a liquid culture medium.

4. The method for producing a meat substitute composition according to claim 1, **characterized in that**
the carbon source is selected from one or more of the group consisting of maltose, glucose, lactose, starch, sucrose, fructose and galactose.

5. The method for producing a meat substitute composition according to claim 1, **characterized in that**
the nitrogen source is selected from one or more of the group consisting of yeast extract, soy peptone, soy flour, ammonium chloride, calcium nitrate, potassium nitrate and sodium nitrate.

6. The method for producing a meat substitute composition according to claim 1, **characterized in that**,
the minerals are selected from one or more of the group consisting of K₂HPO₄, KH₂PO₄, ZnSO₄, MgSO₄, CuSO₄ and FeSO₄.

7. The method for producing a meat substitute composition according to claim 4, **characterized in that**
the carbon source contains, based on the total composition, 0.5 -2% (w/v) sucrose and 0.5 - 2% (w/v) fructose, and satisfies a ratio of sucrose: fructose = 1: 0.8 - 1.2.

8. The method for producing a meat substitute composition according to claim 5, **characterized in that**
the nitrogen source contains, based on the total composition, 0.1 - 1% (w/v) yeast extract and 0.1 - 1% (w/v) soy peptone, and satisfies a ratio of yeast extract: soy peptone = 1: 0.6 - 1.5.

9. The method for producing a meat substitute composition according to claim 6, **characterized in that**
the minerals contain, based on the total composition, 0.01 - 0.2% (w/v) KH₂PO₄ and 0.01 - 0.2% (w/v) MgSO₄, and satisfies a ratio of KH₂PO₄:MgSO₄ = 1: 0.5 - 2.

10. The method for producing a meat substitute composition according to claim 1, **characterized in that**
the culture is performed in a stirred-type bioreactor.

11. The method for producing a meat substitute composition according to claim 10, **characterized in that**
the operation of the stirred-type bioreactor satisfies the following conditions:
air supply amount: 0.05 - 0.2 vvm, stirring speed: 30 - 100 rpm, culture temperature: 22 - 27°C, pH: 5 - 7, and culture time: 4.5 - 7 days.

12. A meat substitute, **characterized in that**
the meat substitute is produced by the method for producing the same according to any one of claims 1 to 11.

13. The meat substitute according to claim 12, **characterized in that**
the meat substitute has a moisture content of 82 - 88%.

14. A meat substitute food, **characterized by**
comprising the meat substitute according to claim 12 as an active ingredient.

15. The meat substitute food according to claim 14, **characterized in that**
the meat substitute food contains a spice, a sweetener, a sauce, and a quality improver.

16. The meat substitute food according to claim 14, **characterized in that**
the formulation of the meat substitute food is selected from the group consisting of steaks, cutlets, patties, nuggets, meatballs, sausages and jerky.
